# EUROPÄISCHE PATENTANMELDUNG

(11) **EP 2 940 318 A1**
(43) Veröffentlichungstag der Anmeldung: **04.11.2015**
(21) Anmeldenummer: 15160020.2
(22) Anmeldetag: 20.03.2015
(51) Int. Cl.: F15B 21/00, F16L 37/02, F16L 37/098, F16L 23/036, F16L 47/14, F16D 48/02, B29C 65/58, B29C 65/60, B29C 65/00, F16B 17/00

(54) **GEHÄUSE FÜR EINEN DÄMPFER UND DÄMPFER FÜR EINE HYDRAULIKLEITUNG**

(30) Priorität: 28.04.2014 DE 102014207886
(71) Anmelder: Schaeffler Technologies AG & Co. KG, 91074 Herzogenaurach (DE)
(72) Erfinder: Lecointre, Jean-Michel, 45450 DONNERY (FR)

(57) **Zusammenfassung**

Die Erfindung betrifft einen Dämpfer (2) für eine Hydraulikleitung (3), welcher ein Gehäuse (1) und einen Deckel (10) aufweist, wobei der Deckel (10) mit dem Gehäuse (1) flüssigkeitsdichtend und zugfest verbindbar ist, wobei der Deckel (10) gegenüber dem Gehäuse (1) mittels eines Dichtrings (7) in zumindest einer korrespondierenden Nut (6, 14) abdichtbar ist, und wobei der Deckel (10) mittels einer Mehrzahl von Zugelementen (16) mit dem Gehäuse (1) zugfest verbindbar ist.

Mit der hier vorgeschlagenen Verbindung zwischen einem Gehäuse (1) und einem Deckel (10) kann die Aufgabe des Dichtens und der Zugkraftaufnahme voneinander separiert werden, wodurch der Aufbau des Dämpfers (2) robuster wird.

## Beschreibung

Die Erfindung betrifft ein Gehäuse für einen Dämpfer einer Hydraulikleitung und einen komplementären Deckel sowie einen Dämpfer für eine Hydraulikleitung, insbesondere für einen Ausrücker in einem Kraftfahrzeug.

Aus dem Stand der Technik sind Dämpfer für eine Hydraulikleitung bekannt, die zumindest teilweise aus einem Kunststoff gefertigt sind, und die mittels Reibschweißen miteinander verbunden werden. Durch die Reibschweißverbindung ist die hydraulische Flüssigkeit nach außen hin abgedichtet und zudem ist eine Drucklast, die als Zuglast in der Reibschweißnaht aufgenommen wird, auf den Dämpfer übertragbar. Es ist jedoch nachteilig, dass die Reibschweißverbindung diesen zwei unterschiedlichen Lasten unterliegt und somit die Fehleranfälligkeit für Reibschweißverbindung erhöht ist; denn die Reibschweißnaht muss zugleich umlaufend geschlossen sein, um abzudichten, und eine ausreichende Verschweißungstiefe aufweisen, um eine Zuglast aufnehmen. Zudem ist beim Reibschweißen die relative Winkelposition zwischen einem Gehäuse und einem komplementären Deckel aufgrund der notwendigen relativen Rotationsbewegung beim Reibschweißen nur in weiten Grenzen einstellbar, beziehungsweise eine exakte Einstellung der relativen Winkelposition ist mit großem Aufwand verbunden.

Hiervon ausgehend liegt der vorliegenden Erfindung die Aufgabe zugrunde, die aus dem Stand der Technik bekannten Nachteile zumindest teilweise zu überwinden. Die Aufgabe wird durch die Merkmale der unabhängigen Patentansprüche gelöst. Vorteilhafte Weiterbildungen sind Gegenstand der abhängigen Patentansprüche.

Die Erfindung betrifft ein Gehäuse für einen Dämpfer einer Hydraulikleitung, welche einen ersten Durchlass für eine hydraulische Flüssigkeit aufweist, eine erste Dichtfläche mit einer ersten Aufnahme für einen Dichtring, eine Mehrzahl von mit dem Gehäuse einstückig gebildeten Stäben zum Einführen in komplementäre Öffnungen eines Deckels, wobei die Stäbe jeweils eine verformbare Einführspitze aufweisen, sodass ein Deckel mittels der komplementären Öffnungen formschlüssig flüssigkeitsdichtend und zugfest am Gehäuse befestigbar ist.

Das Gehäuse bildet eine Hälfte eines Dämpfers und bildet dabei einen ersten Durchlass, der von einer hydraulischen Flüssigkeit durchströmbar ist. In der Regel handelt es sich dabei um ein rotationssymmetrisches Bauteil, es können aber jegliche andere Formen, insbesondere auch rechteckige Formen gewählt werden. Das Gehäuse weist zum Flüssigkeitsdichten eine Dichtfläche auf, in der eine Aufnahme für einen Dichtring, insbesondere einen O-Ring gebildet ist. Die Aufnahme ist dabei bevorzugt eine normgerechte Vertiefung für einen Dichtring, kann aber auch als glatte Auflagefläche für einen Dichtring ausgeführt sein. Bei dem Gehäuse sind eine Mehrzahl von mit dem Gehäuse einstückig gebildeten Stäben eingerichtet, die sich in axialer Richtung parallel zum Durchlass von dem Gehäuse Richtung Deckel erstrecken. Von dieser Ausrichtung sind auch leicht abweichende Neigungen (zum Beispiel maximal 5°, bevorzugt weniger als 2°) möglich, sodass jedoch ein Deckel axial auf das Gehäuse aufgeschoben werden kann. Bevorzugt haben die Stäbe dabei eine Form, die mit den Öffnungen komplementär ist, sodass die Stäbe, mit bevorzugt leichtem Spiel, in die Öffnungen einführbar sind, sodass die Öffnungen im Wesentlichen durch die Stäbe gefüllt sind, wenn der Deckel auf das Gehäuse aufgeführt ist. Es können auch Stäbe mit einer Einführspitze derart eingerichtet sein, dass sie zunächst leicht in die komplementären Öffnungen einführbar sind und im Weiteren in den Öffnungen klemmen.

Die Stäbe weisen dabei verformbare Einführspitzen auf. Die Einführspritzen können plastisch oder elastisch verformbar sein. Gemäß einer bevorzugten Ausführungsform der Erfindung sind die Einführspitzen plastisch verformbar. Sind die Stäbe in die komplementären Öffnungen eingeführt, so können die Einführspitzen derart verformt werden, dass der Deckel im Bereich der Öffnungen formschlüssig angebunden ist. Hierzu bilden die komplementären Öffnungen auf der dem Gehäuse abgewandten Seite eine Flanschfläche, auf die die verformbaren Einführspitzen für den Formschluss aufgebracht werden können. Hierdurch ist der Deckel formschlüssig mit dem Gehäuse verbunden. Mittels des Dichtrings ist die Paarung aus Gehäuse und Deckel bei der Dichtfläche flüssigkeitsdicht verbunden und über die formschlüssigen Stäbe kann eine Zugkraft infolge eines Drucks im Inneren des Dämpfers aufgenommen werden.

Mit dem hier vorgeschlagenen Gehäuse ist es möglich, die Aufgaben des Flüssigkeitsdichtens und der Zugkraftaufnahme voneinander zu separieren und somit die Konstruktion insgesamt robuster zu gestalten. Die Verwendung eines Dichtrings, insbesondere eines O-Rings, ist besonders einfach in der Fertigung umzusetzen und die O-Ringe sind als genormte massenproduzierte Elemente sehr kostengünstig. Ganz besonders bevorzugt werden die Einführspitzen thermisch verformt, wobei die Einführspitzen aus einem Thermoplast gebildet sind. Insgesamt ist so eine Fertigung möglich, die deutlich weniger aufwendig ist als das zuvor verwendete Reibschweißen.

Gemäß einem weiteren Aspekt der Erfindung wird ein Deckel für einen Dämpfer einer Hydraulikleitung vorgeschlagen, welcher einen zweiten Durchlass für eine hydraulische Flüssigkeit aufweist, eine zweite Dichtfläche mit einer zweiten Aufnahme für einen Dichtring, eine Mehrzahl von Öffnungen mit jeweils einer Flanschfläche, in die komplementäre Stäbe mit jeweils einer verformbaren Einführspitze eines Gehäuses einführbar sind, sodass ein Gehäuse am Deckel formschlüssig flüssigkeitsdichtend und zugfest befestigbar ist.

Über den zweiten Durchlass des Deckels kann eine hydraulische Flüssigkeit strömen, sodass im Zusammenbau von Gehäuse und Deckel, bevorzugt wie oben beschrieben, ein durchströmbarer Dämpfer gebildet ist. Die Dichtfläche des Deckels umfasst eine Aufnahme für einen Dichtring, bevorzugt für einen O-Ring, wobei bevorzugt die Aufnahme eine normgerechte Vertiefung für einen entsprechenden Dichtring aufweist. Die Dichtfläche kann aber auch als glatte Oberfläche gebildet sein, die zum Dichten zusammen mit einem Dichtring aufgrund einer entsprechenden Oberflächenrauigkeit, Ebenheit und Parallelität geeignet ist. Der Deckel weist eine Mehrzahl von Öffnungen auf, die mit komplementären Stäben korrespondieren, sodass die Öffnungen mit Stäben mit einer komplementären Form im Wesentlichen ausfüllbar sind. Bevorzugt ist ein geringes Spiel vorgesehen, sodass die Stäbe leicht in die Öffnungen einführbar sind. Es können aber auch Stäbe mit einer Einführspitze derart eingerichtet sein, dass sie zunächst leicht in die Öffnungen einführbar sind und im Weiteren in den Öffnungen klemmen. Die Öffnungen sind dabei derart eingerichtet, dass sie auf der dem Gehäuse abgewandten Seite eine Flanschfläche bilden, die beim Anliegen des Gehäuses am Deckel derart nah beim Gehäuse angeordnet sind, dass die komplementären Stäbe darüber hinausragen, sodass die Stäbe durch Verformung der Einführspitze mit der Flanschfläche zum Anliegen kommen können. Über dieses Anliegen wird der Deckel mit einem Gehäuse formschlüssig verbunden, sodass der Deckel mit dem Gehäuse über die Dichtfläche mit dem Dichtring flüssigkeitsdichtend verbunden ist und über die Stäbe im Zusammenwirken mit den Flanschflächen zugfest befestigt sind. Somit sind die Aufgaben des Dichtens und der Zugkraftaufnahme voneinander separiert und zugleich ist ein kostengünstiges und einfaches Fertigungsverfahren vorgeschlagen.

Gemäß einem weiteren Aspekt der Erfindung wird ein Dämpfer für eine Hydraulikleitung vorgeschlagen, welcher ein Gehäuse und einen Deckel aufweist, wobei der Deckel mit dem Gehäuse flüssigkeitsdichtend und zugfest verbindbar ist, wobei der Deckel gegenüber dem Gehäuse mittels eines Dichtrings in zumindest einer korrespondierenden Aufnahme abdichtbar ist, und wobei der Deckel mittels einer Mehrzahl von Zugelementen mit dem Gehäuse zugfest verbindbar ist.

Das Gehäuse und der Deckel bilden paarig einen Durchlass für eine hydraulische Flüssigkeit, wobei der Dämpfer flüssigkeitsdicht ist und zur Druckkraftaufnahme geeignet ist. Hierzu sind das Gehäuse und der Deckel mit einem Dichtring in zumindest einer korrespondierenden Aufnahme abdichtbar, wobei die Zugkraft auf den Dichtring sowie auf den Dämpfer an sich beziehungsweise das Gehäuse und/oder den Deckel über eine Mehrzahl von Zugelementen gewährleistet wird. Die Zugelemente können dabei zum Beispiel Schrauben, Zugbolzen, Nieten oder Ähnliches sein. Der Dichtring ist bevorzugt ein O-Ring und die korrespondierende Aufnahme eine entsprechende Vertiefung in die der Dichtring einlegbar ist und somit für eine normgerechte Flüssigkeitsdichtung sorgt.

Bei dieser Ausgestaltung des Dämpfers werden die Aufgaben des Dichtens und der Zugkraftaufnahme voneinander separiert, wodurch die Fehleranfälligkeit der Verbindung im Dämpfer verringert wird. Zugleich wird die Fertigung vereinfacht und kostengünstiger. Dabei muss nur ein zusätzliches Element, zum Beispiel ein O-Ring, verwendet werden, welches sehr kostengünstig ist. Auch die Zugelemente sind als äußerst kostengünstige Normbauteile, zum Beispiel Nieten, ausführbar.

Gemäß einer weiteren vorteilhaften Ausführungsform des Dämpfers ist zumindest ein Zugelement ein mit dem Gehäuse oder dem Deckel einstückig gebildeter Stab mit einer Einführspitze, wobei der Stab in eine komplementäre Öffnung im Deckel beziehungsweise im Gehäuse einführbar ist, und wobei eine zugfeste Verbindung mittels Deformation der Einführspitze, nach Einführen in die komplementäre Öffnung mit einer Flanschfläche, erzielbar ist.

Durch die einstückige Ausbildung des Zugelements mit dem Gehäuse oder dem Deckel ist eine nachträgliche Einbringung von Zugelementen in entsprechende Öffnungen im Gehäuse und im Deckel nicht notwendig. Vielmehr können das Gehäuse und der Deckel zueinander über die Zugelemente einfach miteinander positioniert werden. Das Zugelement weist dabei einen Stab mit einer Einführspitze auf, wobei die Einführspitze deformierbar ist. Die komplementären Öffnungen weisen dabei eine Flanschfläche auf, die mit der deformierten Einführspitze derart zusammenwirkt, dass eine Zugkraft von dem Gehäuse auf den Deckel übertragbar ist. Die komplementäre Öffnung ist dabei bevorzugt derart eingerichtet, dass der Stab die Öffnung im Wesentlichen komplett ausfüllt, sodass eine radiale Führung in der Öffnung möglich ist. Bevorzugt ist der Stab mit einem Übermaß gegenüber der komplementären Öffnung ausgebildet, sodass nach der Einführung des Stabs mit der Einführspitze, welche, zumindest zuvorderst, ein deutliches Untermaß in Bezug die komplementäre Öffnung aufweist, der Deckel mit dem Gehäuse verklemmbar ist. Somit ist eine besonders einfache Montage erreichbar.

Gemäß einer weiteren vorteilhaften Ausführungsform des Dämpfers ist die zumindest eine Einführspitze aus einem Thermoplast gebildet.

Durch die Ausbildung zumindest der Einführspitze aus einem Thermoplast kann die Einführspitze thermisch verformt werden, sodass diese wie ein Niet eine zugfeste Verbindung zwischen dem Gehäuse und dem Deckel bewerkstelligen kann. Ganz besonders bevorzugt ist das entsprechende Bauteil, zum Beispiel das Gehäuse, insgesamt aus einem Thermoplast gebildet und ganz besonders bevorzugt ebenso das Gegenelement, zum Beispiel der Deckel. Hierdurch kann der Dämpfer insgesamt als Spritzgusselement hergestellt werden, welches besonders kostengünstig ist.

Gemäß einer weiteren vorteilhaften Ausführungsform des Dämpfers ist das Gehäuse gemäß der obigen Beschreibung gebildet und/oder der Deckel gemäß der obigen Beschreibung gebildet.

Hiermit ist die eingangs beschriebene Ausführungsform des Gehäuses beziehungsweise des Deckels gemeint, bei dem eine Mehrzahl von Stäben einstückig mit dem Gehäuse gebildet sind und der Deckel komplementäre Öffnungen für die Stäbe aufweist. Damit ist eine besonders einfache, kostengünstige Montage möglich, wobei zugleich kostengünstige Elemente eingesetzt werden.

Gemäß einer weiteren vorteilhaften Ausführungsform des Dämpfers bildet die zumindest eine Einführspitze einen Widerhaken aus, sodass der Deckel mit dem Gehäuse sicher vorpositionierbar ist. Durch die Ausbildung eines Widerhakens, welcher mit der Flanschfläche der komplementären Öffnung korrespondiert, kann der Deckel mit dem Gehäuse sicher vormontiert werden und gibt dem Monteur eine Rückmeldung, wann der Deckel mit dem Gehäuse in die richtige Position gebracht worden ist. Somit müssen auch keine weiteren Haltevorrichtungen verwendet werden, um Einführspitzen entsprechend zu definieren. Darüber hinaus ist sichergestellt, dass bei einer Deformation der Einführspitze, insbesondere einer thermischen Deformation, bereits ein Formschluss vorliegt, sodass auch hier die Fehleranfälligkeit der Verbindung reduziert wird. Zudem wird eine eindeutig vordefinierte Spannung auf den Dichtring aufgebracht, sodass die Dichtwirkung eindeutig reproduzierbar ist.

Gemäß einer weiteren vorteilhaften Ausführungsform des Dämpfers sind die Zugelemente derart angeordnet, dass eine relative Verdrehung zur Positionierung von dem Deckel zum Gehäuse stufig in einem Winkelbereich von 5° bis 45°, besonders bevorzugt von 22,5°, einstellbar ist.

Für viele Anwendungen ist eine definierte Orientierung des Gehäuses zum Deckel vorteilhaft, insbesondere bei einem Ausrücker eines Kraftfahrzeugs, bei dem bei beengten Raumverhältnissen eine gute Zugänglichkeit ausschlaggebend sein kann. Der Dämpfer beziehungsweise das Gehäuse und der Deckel sind dabei bevorzugt rotationssymmetrisch aufgebaut und weisen eine Mehrzahl von Zugelementen auf, die mit ihrer Anzahl an den gewünschten Winkelbereich angepasst sind. Ganz besonders bevorzugt sind 16 Zugelemente vorgesehen, sodass eine stufige relative Verdrehung von Deckel zum Gehäuse im Bereich von 22,5° einstellbar ist. Somit wird eine Einstellbarkeit der relativen Winkelposition des Gehäuses zum Deckel zueinander erreicht, der in einem minimalen Bereich liegt, der bei einer Reibschweißung gerade noch einstellbar ist.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:
- Fig. 1:: einen konventionellen reibgeschweißten Dämpfer,
- Fig. 2:: ein Gehäuse mit einstückig geformten Stäben,
- Fig. 3:: einen Deckel mit komplementären Öffnungen,
- Fig. 4:: einen vorgefügtes Gehäuse,
- Fig. 5:: einen Stab in einer Öffnung im Detail,
- Fig. 6:: einen gefügten Dämpfer,
- Fig. 7:: eine deformierte Einführspitze bei einer Öffnung.

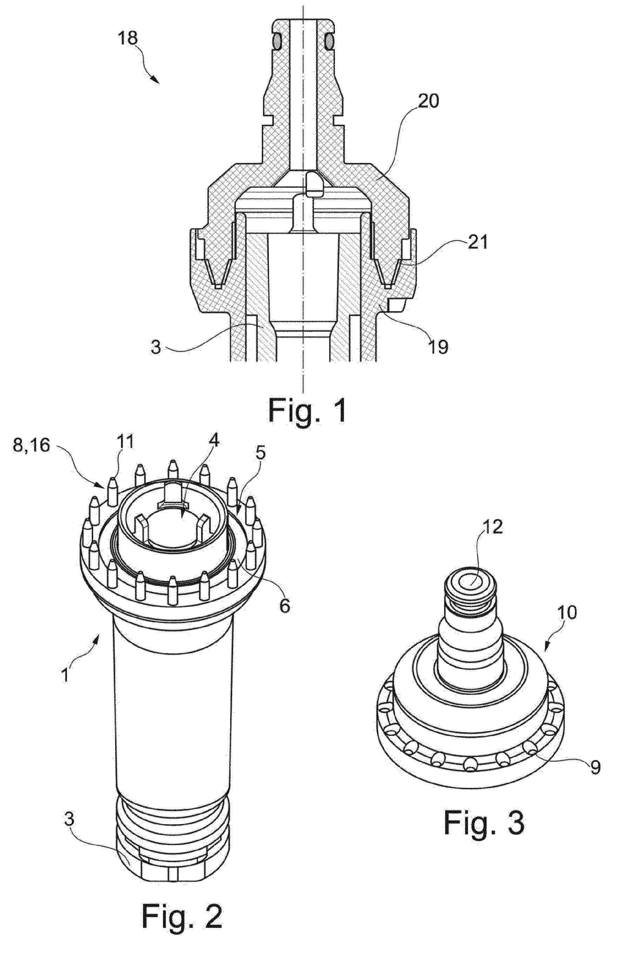

In Fig. 1 ist ein konventioneller Dämpfer 18 im Schnitt gezeigt, bei dem ein konventionelles Gehäuse 19 durch eine Reibschweißverbindung 21 dichtend und zugfest mit einem konventionellen Deckel 20 verbunden ist, sodass eine Hydraulikleitung 3 mit einem konventionellen Dämpfer 18 verbunden ist.

In Fig. 2 ist ein Gehäuse 1 gezeigt, bei dem eine Mehrzahl von Stäben 8 gezeigt sind, welche als Zugelemente 16 ausgebildet sind und eine Einführspitze 11 aufweisen. Innerhalb des von den Zugelementen 16 gebildeten Kreises befindet sich eine erste Dichtfläche 5, in die eine erste Aufnahme 6, hier eine genormte Nut, eingeführt ist. In dem Gehäuse 1 befindet sich ein erster Durchlass 4 für eine hydraulische Flüssigkeit. Das Gehäuse 1 ist mit einer Hydraulikleitung 3 verbunden.

In Fig. 3 ist ein Deckel 10 gezeigt, welcher eine Mehrzahl von Öffnungen 9 aufweist, mit denen dieser Deckel 10 zum Beispiel mit einem Gehäuse 1, wie es in Fig. 2 dargestellt ist, verbindbar ist. Der Deckel 10 weist einen zweiten Durchlass 12 auf, welcher einen verringerten Durchmesser gegenüber dem ersten Durchlass 4 für eine hydraulische Flüssigkeit bildet.

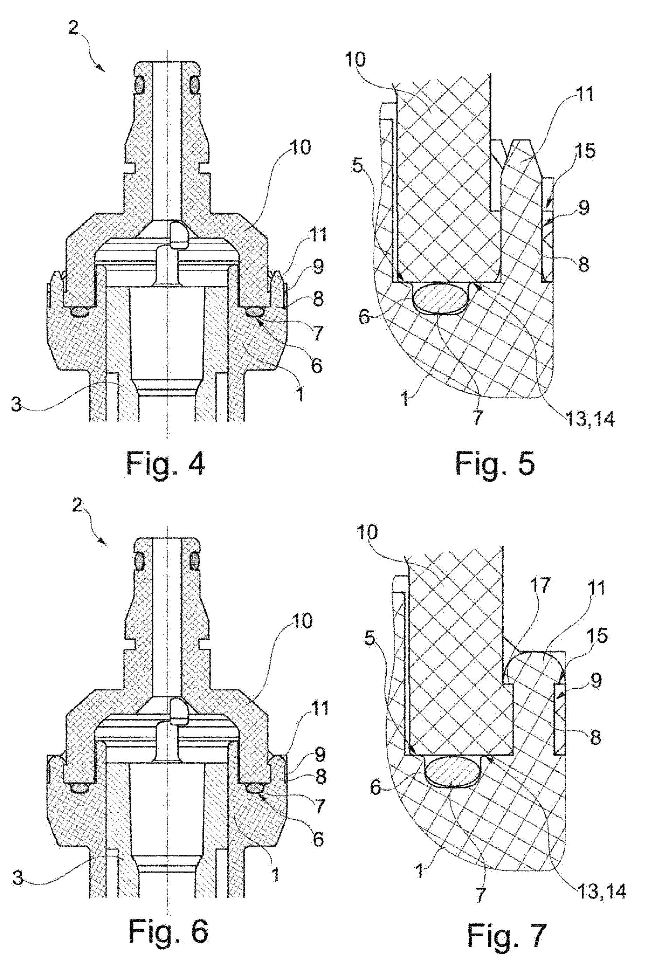

In Fig. 4 ist ein Dämpfer 2 bestehend aus einem Deckel 10 und einem Gehäuse 1 im Schnitt dargestellt, der hier vollständig aus einem Kunststoff, bevorzugt aus einem Thermoplast, gebildet ist. Hierbei ist der Dämpfer 2 mit einer Hydraulikleitung 3 verbunden. Der Deckel 10 ist hier mit dem Gehäuse 1 nur vormontiert; dies ist an dem Stab 8 mit der intakten (beziehungsweise nicht deformierten) Einführspitze 11 in der Öffnung 9 des Deckels 10 zu erkennen. Der Dichtring 7, hier ein O-Ring, befindet sich in der ersten Aufnahme 6 des Gehäuses 1 und ist bereits komprimiert.

In Fig. 5 ist ein Ausschnitt der Konfiguration in Fig. 4 gezeigt, wobei hier zunächst der komprimierte Dichtring 7 in der ersten Aufnahme 6 der ersten Dichtfläche 5 dargestellt ist. Die Kompression wird durch die zweite Dichtfläche 13 mit der zweiten Aufnahme 14 erzeugt, wobei hier die zweite Aufnahme 14 lediglich als glatte Dichtfläche ausgebildet ist. Rechts im Bild ist ein Stab 8 mit einer Einführspitze 11 dargestellt, sodass der Stab 8 mit der Einführspitze 11 leicht in eine komplementäre Öffnung 9, die hier exakt an den Durchmesser des Stabs 8 angepasst ist, einführbar ist. Auf der dem Gehäuse abgewandten Seite der Öffnung 9 befindet sich eine Flanschfläche 15, mit der in der Endmontage ein Formschluss gebildet werden kann.

In Fig. 6 ist die gleiche Anordnung wie in Fig. 4 gezeigt, wobei hier die Einführspitze 11 bereits deformiert ist und mit der Öffnung 9 des Deckels 10 eine formschlüssige Verbindung bildet, sodass eine Zuglast auf den Deckel 10 übertragbar ist und zugleich eine Dichtung über den Dichtring 7 in der ersten Aufnahme 6 gebildet ist.

In Fig. 7 sind der Stab 8 und die Dichtung in einer Vergrößerung im Detail dargestellt, wobei hier die deformierte Einführspitze 11 zu erkennen ist, welche bevorzugt aus einem Thermoplast gebildet ist und zur Deformation einer erhöhten Temperatur ausgesetzt wurde, sodass sie sich schmelzend an die Flanschfläche 15 anlegt. Hierbei kann ein Widerhaken 17 vergrößert unterstützt oder auch erst durch die thermische Verformung gebildet werden, wie es hier in dem Beispiel von Fig. 4 bis 7 angedeutet ist.

Mit der hier vorgeschlagenen Verbindung zwischen einem Gehäuse und einem Deckel kann die Aufgabe des Dichtens und der Zugkraftaufnahme voneinander separiert werden, wodurch der Aufbau des Dämpfers robuster wird.

### Bezugszeichenliste

- 1: Gehäuse
- 2: Dämpfer
- 3: Hydraulikleitung
- 4: erster Durchlass
- 5: erste Dichtfläche
- 6: erste Aufnahme
- 7: Dichtring
- 8: Stab
- 9: Öffnung
- 10: Deckel
- 11: Einführspitze
- 12: zweiter Durchlass
- 13: zweite Dichtfläche
- 14: zweite Aufnahme
- 15: Flanschfläche
- 16: Zugelement
- 17: Widerhaken
- 18: konventioneller Dämpfer
- 19: konventionelles Gehäuse
- 20: konventioneller Deckel
- 21: Reibschweißverbindung

## Patentansprüche

1. Gehäuse (1) für einen Dämpfer (2) einer Hydraulikleitung (3), aufweisend einen ersten Durchlass (4) für eine hydraulische Flüssigkeit, eine erste Dichtfläche (5) mit einer ersten Aufnahme (6) für einen Dichtring (7), eine Mehrzahl von mit dem Gehäuse (1) einstückig gebildeten Stäben (8) zum Einführen in komplementäre Öffnungen (9) eines Deckels (10), wobei die Stäbe (8) jeweils eine verformbare Einführspitze (11) aufweisen, sodass ein Deckel (10) mittels der komplementären Öffnungen (9) formschlüssig flüssigkeitsdichtend und zugfest am Gehäuse (1) befestigbar ist.

2. Deckel (10) für einen Dämpfer (2) einer Hydraulikleitung (3), aufweisend einen zweiten Durchlass (12) für eine hydraulische Flüssigkeit, eine zweite Dichtfläche (13) mit einer zweiten Aufnahme (14) für einen Dichtring (7), eine Mehrzahl von Öffnungen (9) mit jeweils einer Flanschfläche (15), in die komplementäre Stäbe (8) mit jeweils einer verformbaren Einführspitze (11) eines Gehäuses (1) einführbar sind, sodass ein Gehäuse (1) am Deckel (10) formschlüssig flüssigkeitsdichtend und zugfest befestigbar ist.

3. Dämpfer (2) für eine Hydraulikleitung (3), aufweisend ein Gehäuse (1) und einen Deckel (10), wobei der Deckel (10) mit dem Gehäuse (1) flüssigkeitsdichtend und zugfest verbindbar ist, wobei der Deckel (10) gegenüber dem Gehäuse (1) mittels eines Dichtrings (7) in zumindest einer korrespondierenden Nut (6,14) abdichtbar ist, und wobei der Deckel (10) mittels einer Mehrzahl von Zugelementen (16) mit dem Gehäuse (1) zugfest verbindbar ist.

4. Dämpfer (2) nach Anspruch 3, wobei zumindest ein Zugelement (16) ein mit dem Gehäuse (1) oder dem Deckel (10) einstückig gebildeter Stab (8) mit einer Einführspitze (11) ist, wobei der Stab (8) in eine komplementäre Öffnung (9) im Deckel (10) beziehungsweise im Gehäuse (1) einführbar ist, und wobei eine zugfeste Verbindung mittels Deformation der Einführspitze (11), nach Einführen in die komplementäre Öffnung (9) mit einer Flanschfläche (15), erzielbar ist.

5. Dämpfer (2) nach Anspruch 4, wobei die zumindest eine Einführspitze (11) aus einem Thermoplast gebildet ist.

6. Dämpfer (2) Anspruch 4 oder 5, wobei das Gehäuse (1) nach Anspruch 1 gebildet ist und/oder der Deckel (10) nach Anspruch 2 gebildet ist.

7. Dämpfer (2) nach einem der Ansprüche 4 bis 6, wobei die zumindest eine Einführspitze (11) einen Widerhaken (17) ausbildet, sodass der Deckel (10) mit dem Gehäuse (1) sicher vorpositionierbar ist.

8. Dämpfer (2) nach einem der Ansprüche 3 bis 7, wobei die Zugelemente (16) derart angeordnet sind, dass eine relative Verdrehung zur Positionierung von dem Deckel (10) zum Gehäuse (1) stufig in einem Winkelbereich von 5° bis 45°, besonders bevorzugt von 22,5°, einstellbar ist.
